# EUROPEAN PATENT SPECIFICATION

(11) **EP 0 283 258 B1**
(45) Date of publication and mention of the grant of the patent: **26.05.1993**
(21) Application number: 88302279.0
(22) Date of filing: 16.03.1988
(51) Int. Cl.: H02B 1/04

(54) **Barrier assembly for partitioning components**
Scheidungsaufbau zum Aufteilen von Komponenten
Assemblage de cloisons pour compartimenter des composants

(30) Priority: 17.03.1987 JP 39780/87 U; 22.06.1987 JP 95609/87 U
(43) Date of publication of application: 21.09.1988
(73) Proprietor: OMRON TATEISI ELECTRONICS CO., Kyoto-shi Kyoto-fu (JP)
(72) Inventor: Shinohara, Kenji, Ibaraki-shi Osaka-fu (JP); Wakatsuki, Yoshihiro, Yatsuka-gun Shimane-ken (JP); Niwa, Takashi, Kyoto-shi Kyoto-fu (JP)
(74) Representative: Calderbank, Thomas Roger

(56) References cited:
- DE-A- 1 810 197
- DE-A- 2 029 491
- FR-A- 1 530 858
- OMRON CONTROL COMPONENTS 80-81, pages 100 & 107 (Omron Electronics Inc).

## Description

The present invention relates to a barrier assembly which may be used, for example, to partition off adjacent pushbutton switches on display lamps arrayed in a line within an opening in a mounting panel provided in, for example, a ticket machine.

In a ticket machine a plurality of illuminated button switches that indicate the fares to respective destinations are provided on a mounting panel. When one of the pushbutton switches is pressed, the machine issues a ticket which has printed on it an amount of money corresponding to the fare displayed on the pressed switch.

In general, the pushbutton switches are arrayed on a mounting panel in a longitudinal line, a lateral line, or in both longitudinal and lateral directions. The pushbutton switches are mounted within respective openings provided in the mounting panel and this is done in such a manner that the fare indicating surfaces on the switches are exposed. The mounting panel must be provided with a number of openings which corresponds to the number of pushbutton switches required. When the pushbutton switches are arrayed in a line, it is better from the viewpoint of machining to make a large opening in the panel and to fit a plurality of aligned pushbutton switches into the opening.

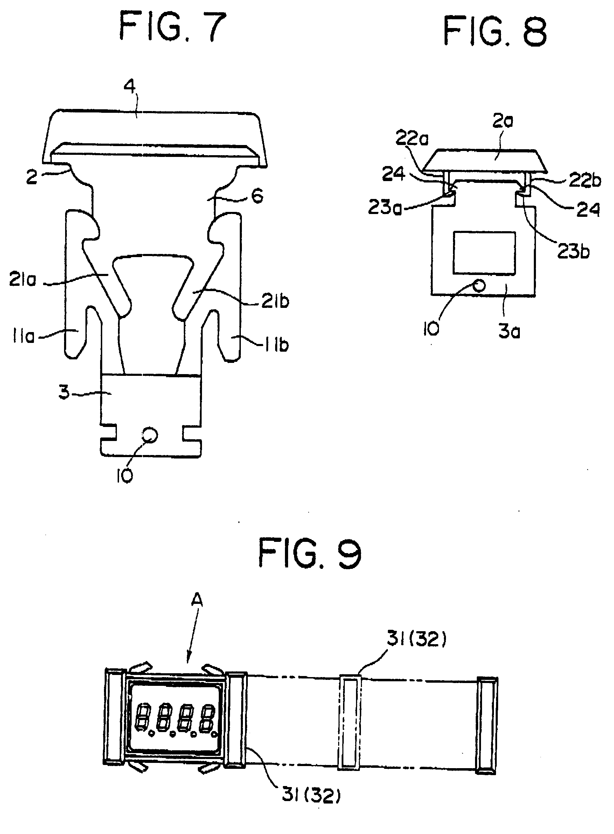

In such a known case, as shown in Fig. 9 of the accompanying drawings, barriers (31) 32 are interposed between each pair of adjacent pushbutton switches A in order to partition them off from each other.

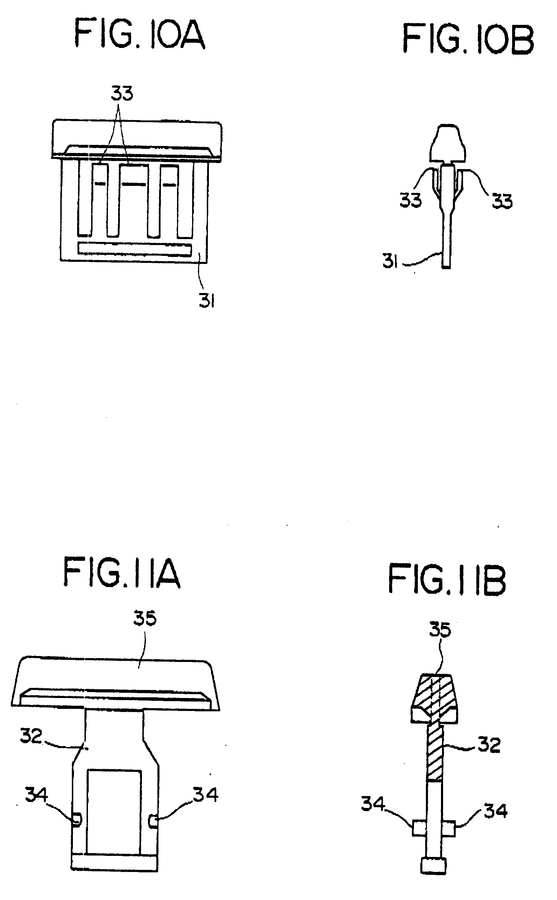

There are two types known of barrier. A first type of barrier 31 (shown in Figs. 10A and 10B) is inserted from the front side of the panel between adjacent switches after the switches A have been fitted into the opening in the mounting panel. A second type of barrier 32 (shown in Figs. 11A and 11B) is attached to the respective pushbutton switches A to form one unit, and this pushbutton switch assembly is subsequently secured to the mounting panel.

With the first type of barrier 31, after the pushbutton switches have been fitted into the mounting opening, the barriers 31 are inserted from the front of the panel. Retaining step parts 33 shown in Fig. 10B engage the side surfaces of the switches, and thus prevent the pushbutton switches from being pulled out from the front of the panel. However, this type of conventional barrier 31 suffers from the disadvantage that when the clearance between the panel and the switches is large, it may be impossible to prevent the switches from being pushed rearwardly into the panel. Furthermore, because the step parts 33 project to prevent the barriers 31 from being pulled out forward from the panel, the barriers 31 must be broken when the pushbutton switches need to be replaced. As a result, replacement requires much time and labour, since the barriers 31 cannot be re-used, the cost is increased further.

In the second type of conventional barrier 32, relatively large projections 34 which engage with push button switches A are provided to prevent the switches A from being pulled out forwardly from the panel, and a large flange 35 is provided to prevent the switches A from being pushed rearwardly into the panel. As a result of this construction, however, it is impossible to insert the barrier 32 individually from the front of the panel. It is necessary to first attach barriers 32 to pushbutton switches A, then connect together the required number of such pushbutton switches A in one unit and to subsequently secure this switch assembly to the panel. This prior art barrier is insufficient. Examples of the above barriers can be found in proprietory electronics catalogues, in particular "Omron Control Components 80-81" pages 100 and 107 (Omron Electronics Inc).

Accordingly, the present invention seeks to provide a barrier assembly which, although capable of being removed from the panel aperture when desired, resists being pushed into or pulled out of the panel.

Therefore, according to the present invention, there is provided a barrier assembly for partitioning an aperture in a panel to separate adjacent components mounted in an array in the aperture, the assembly comprising a first barrier member for insertion into said aperture from one side of the panel, and a second barrier member for insertion between said adjacent components from the other side of the panel, the first and second members being mutually engageable.

Embodiments of the present invention will now be described by way of example, with reference to the accompanying drawings, in which:
Fig. 1 is a side view of an assembled barrier assembly of a first embodiment of the present invention;
Fig. 2 is a front view of the barrier assembly shown in Fig. 1;
Fig. 3 is a perspective view of the constituent parts of the barrier assembly shown in Figs. 1 and 2;
Fig. 4 is a perspective view showing the relationship between the barrier assembly and a switch casing;
Fig. 5 is a side view of the switch casing mounted in a panel;
Fig. 6 is an enlarged view of an engagement bore formed in the switch casing;
Fig. 7 is a front view of a barrier assembly of a second embodiment of the present invention;
Fig. 8 is a front view of a barrier assembly of a third embodiment of the present invention;
Fig. 9 is a front view of a barrier and switch assembly known in the prior art and has already been discussed;
Figs. 10A and 10B are a plan view and a side view, respectively, of one form of barrier known in the prior art; and
Figs. 11A and 11B are a plan view and a partially sectioned side view, of another form of barrier known in the prior art.

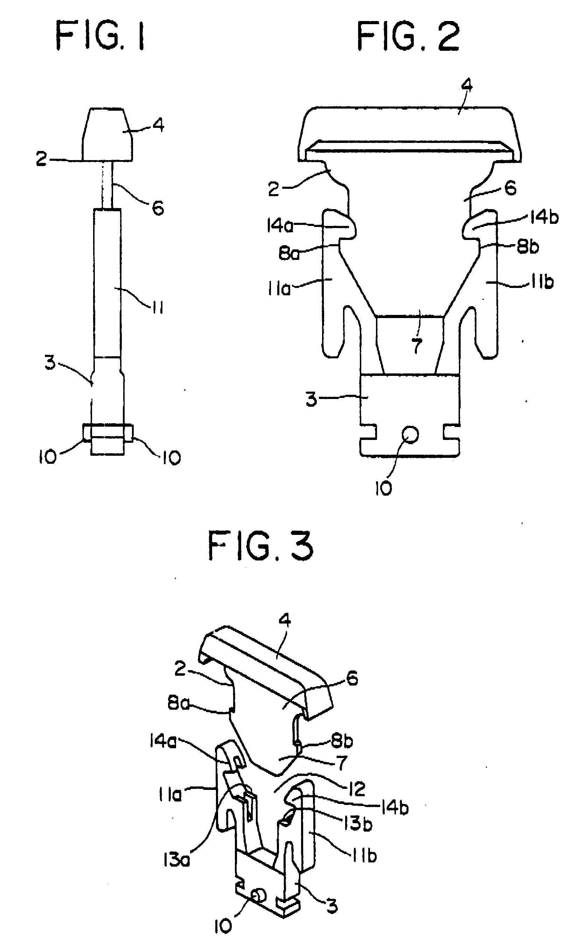

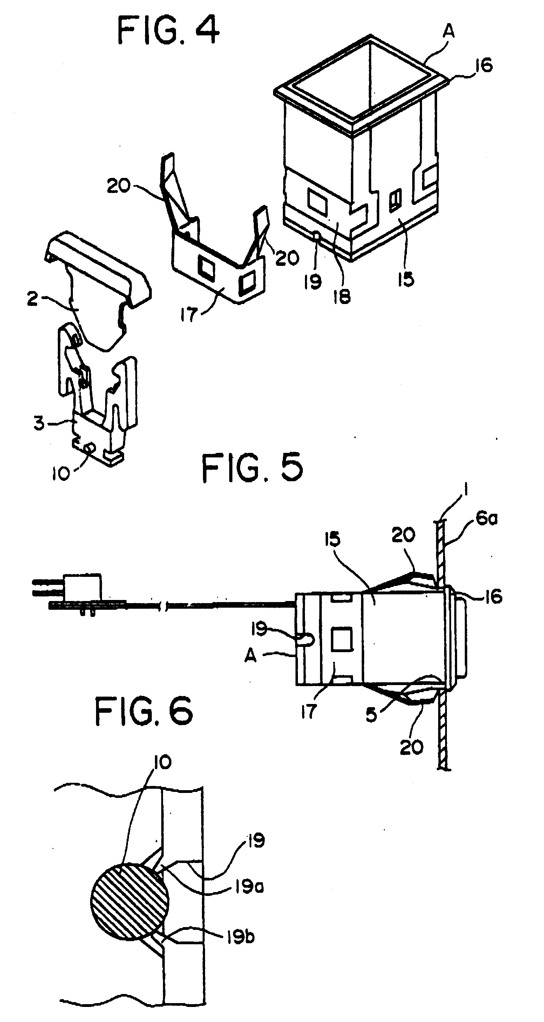

Referring to Figs. 1, 2 and 5, a barrier assembly comprises an outer barrier member 2 which is inserted from the front of a mounting panel 1 (shown in Fig. 5) and a fixing barrier member 3 which is inserted from the rear of the panel 1.

The outer barrier member 2 has a head part which is an enlarged front end part. When the outer barrier member 2 is inserted into a mounting opening 5 in a pushbutton switch assembly (itself mounted in the panel 1), the head part 4 abuts and engages the panel surface 6a, thereby preventing the outer barrier member 2 from being pushed further into the opening 5. The outer barrier member 2 has a thin-walled main body 6 which is integrally formed with the head part 4; the body 6 is inserted into the opening 5. The distal end part 7 of the body 6 is narrower than the body 6 such that the end part 7 has a shape similar to a trapezium and flanges 8a and 8b are provided on both sides, of the distal end part 7.

The fixing barrier member 3 which engages the outer barrier member has a pin 10 projecting at right angles to the plane of the width of the body 6 from each side surface thereof so as to engage a switch casing 15 (see Figs. 4 and 5) of a pushbutton switch A. The fixing barrier member 3 also has two claws formed by arms 11a and 11b extending toward the outer barrier member 2 so that the main body 6 of the outer barrier member 2 fits into the space defined between the arms 11a and 11b. The arms 11a and 11b have a larger thickness than that of the main body 6 of the outer barrier member 2.

The fitting space 12 (shown in Fig. 3) defined between the arms 11a and 11b also has a shape similar to a trapezium. Grooves 13a and 13b which guide and accommodate the distal end part 7 of the outer barrier member 2 are provided on the respective inner sides of the arms 11a and 11b.

The arms 11a and 11b have projections 14a and 14b at their respective distal ends which extend toward each other. When the outer and fixing barrier members 2 and 3 engage each other, the projections 14a and 14b engage the corresponding flanges 8a and 8b of the outer barrier member 2; this maintains the fitting engagement against external forces.

The arms 11a,11b may extend rearwardly, away from the projections 14a,14b to provide wings which, when pushed inwardly, move the projections outwardly thereby to disengage the projections 14a,14b from the flanges 8a,8b.

As shown in Fig. 4, the switch casing 15 for accommodating a pushbutton switch A is provided with a pair of leaf springs 20 which maintain the position of the switch casing 15 in the mounting panel 1, as is shown in Fig. 5. A rim 16 is provided along the outer periphery of the forward end of the switch casing 15, and abuts the panel surface 6a. When the rim 16 is brought into abutment with the panel 1, the respective distal ends of the leaf springs 20 are brought into resilient contact with the rear surface of the panel 1, thereby securing the switch casing 15, of the pushbutton switch A, to the mounting panel 1.

In the arrangement shown in Fig. 4, the leaf springs 20 are integrally formed with a U-shaped frame 17 and are mounted on the switch casing 15 by fitting the frame 17 into a recess 18 in the outer surface of the casing 15.

An engagement recess 19 is provided in the rear portion of each side of the switch casing 15 and the recess 19 is engageable with the engagement pin 10 provided on the fixing barrier member 3.

Prior to mounting the barrier assembly in the panel, the switch casing 15 and the pushbutton switch A are secured to the panel 1 using the rim 16 and the leaf springs 20 as described above, and as shown in Fig. 5.

The fixing barrier member 3 is then inserted from the rear of the panel 1 and the outer barrier member 2 is inserted from the front of the panel 1. The barrier members 2 and 3 then engage each other.

During engagement, the outer and fixing barrier members 2 and 3 are moved relative to each other so that the distal end part 7 of the outer barrier member 2 enters the fitting space 12 and the grooves 13a,13b while opening the resilient arms 11a and 11b of the fixing barrier member 3. After the distal end part 7 has entered the space 12, the arms 11a and 11b return to their previous positions, so that the projections 14a and 14b of the fixing barrier member 3 are respectively engaged with the flanges 8a and 8b of the outer barrier member 2. As a result, the barrier members 2 and 3 are connected together, as shown in Figs. 1 and 2, thus maintaining the fitting engagement against external force.

The pin 10 provided on the fixing barrier member 3 engages the recess 19 in the switch casing 15, and secures the fixing barrier member 3, and hence the outer barrier member 2, to the casing 15.

In this type of arrangement, if an external force acts on the outer barrier member 2 from the front of the panel 1 to force the barrier member 2 into the rear side of the panel 1, the head part 4 of the outer barrier member 2 is forced against the panel surface 6a, and this prevents the barrier assembly from being withdrawn rearward of the panel 1.

The barrier assembly is also constructed so that it cannot be withdrawn from the front of the panel 1. This is because the fixing barrier member 3 is rigidly secured to the switch casing 15 by the engagement pin 10 and engagement recess 19, and the outer barrier member 2 is secured to the fixing barrier member 3 by the engagement structure of the projections 8a, 8b and the projections 14a,14b.

When it is necessary to remove the barrier assembly, for example, in order to replace the pushbutton switch A, the fixing barrier member 3 is first disengaged from the outer barrier member 2 (i.e. the arms 11a and 11b are opened outward) and removed rearward of the panel 1. The outer barrier member 2 is then pulled forward of the panel 1. Accordingly, it is possible to remove the barrier assembly and replace the pushbutton switch A without damaging the barrier members 2 and 3.

Thus, the barrier assembly according to the foregoing embodiment facilitates mounting and removal of the pushbutton switch A and the barrier members 2,3. In addition, it prevents the barrier members 2,3 from being pulled forward or withdrawn rearward of the panel 1 when in use. Furthermore, because the barrier assembly can be reused, the cost is reduced.

As shown in Fig. 6, if a pair of resilient projections 19a and 19b are formed at the edge of the engagement recess 19, it is possible to prevent the engagement pin 10 from disengaging from the recess 19.

Figs. 7 and 8 respectively show second and third embodiments of the present invention. In the embodiment shown in Fig. 7, the distal end portion of the outer barrier member 2 has two arms 21a and 21b which correspond with the two arms 11a and 11b of the fixing barrier member 3 and give the outer barrier member 2 resilience. Accordingly, when the two barrier members 2 and 3 are engaged, the outer barrier member 2 provides an outward resilient force.

In the embodiment shown in Fig. 8, the outer barrier member 2 has two arms 22a, and 22b and distal end projections 23a, and 23b; the fixing barrier member 3 is provided with engagement projections 24a and 24b in contrast to the arrangement shown in Figs. 1 and 2.

The above description and the accompanying drawings are merely illustrative of the application of the principles of the present invention and are not limiting. Numerous other arrangements which embody the principles of the invention may be readily devised by those skilled in the art. Accordingly, the present invention is not limited to the embodiments described in the foregoing description.

## Claims

1. A barrier assembly for partitioning an aperture in a panel (1) to separate adjacent components (A) mounted in an array in the aperture, the assembly comprising:
a first barrier member (2) for insertion into said aperture from one side of the panel (1) characterised in that there is a second barrier member (3) for insertion between said adjacent components from the other side of the panel (1), the first and second members being mutually engageable.

2. A barrier assembly according to claim 1 wherein the second barrier member (3) has a pair of resilient claws (11a,11b) adapted to engage corresponding flanges (8a,8b) projecting outward from the first barrier member (2).

3. A barrier assembly according to claim 2, wherein the first barrier member (2) has a neck (6) and an enlarged head (4), and said flanges (8a,8b) project from opposite sides of the neck (6) and the width of the part of the neck (6) remote from the head (4) is smaller than the width between the flanges (8a,8b) and the arms (11a,11b) engage the flanges (8a,8b) to retain at least a part of the neck between the arms (11a,11b).

4. A barrier assembly according to claim 1, wherein the second barrier member (3) has a pair of resilient arms (11a,11b) adapted to engage a pair of flanges (8a,8b) projecting outward from a neck (6) of the first barrier member (2).

5. A barrier assembly according to any one of the preceding claims wherein the first barrier member (2) has a head (4) for abutting one surface of the mounting panel, and a neck (6) for projecting through the aperture in the panel (1), and wherein the second barrier member (3) has grooves for guiding and accommodating the neck (6).

6. An apparatus having a panel with an aperture therein and a plurality of components mounted in an array in the aperture, there being a barrier assembly according to any one of the preceding claims mounted between adjacent controlling devices, with the first and second members engaged.

7. An apparatus according to claim 6 wherein the second barrier member (3) has at least one projecting pin (10) engaging a recess (19) in the adjacent component(s) (A).

8. An apparatus according to claim 7 wherein a pair of resilient projections (19a,19b) are provided within the recess (19) for retaining the pin (10).

## Patentansprüche

1. Barriereanordnung zum Abteilen einer Öffnung in einer Tafel (1), um benachbarte Bestandteile (A) zu trennen, die in einer Abfolge in der Öffnung montiert sind, wobei die Anordnung umfaßt:
ein erstes Barriereelement (2) zum Einfügen in die genannte Öffnung von einer Seite der Tafel (1), dadurch gekennzeichnet, daß ein zweites Barriereelement (3) zum Einfügen zwischen den genannten benachbarten Bestandteilen von der anderen Seite der Tafel (1) vorhanden ist, wobei das erste und das zweite Element miteinander in Eingriff bringbar sind.

2. Barriereanordnung nach Anspruch 1, worin das zweite Barriereelement (3) ein Paar elastischer Klauen (11a, 11b) aufweist, die so ausgebildet sind, daß sie in entsprechende Flansche (8a, 8b) eingreifen, die vom ersten Barriereelement (2) nach außen vorspringen.

3. Barriereanordnung nach Anspruch 2, worin das erste Barriereelement (2) einen Hals (6) und einen vergrößerten Kopf (4) aufweist, und die genannten Flansche (8a, 8b) von gegenüberliegenden Seiten des Halses (6) vorragen und die Breite des vom Kopf (4) entfernten Teils des Halses (6) kleiner ist als die Breite zwischen den Flanschen (8a, 8b) und die Arme (11a,11b) mit den Flanschen (8a,8b) in Eingriff sind, um zumindest einen Teil des Halses zwischen den Armen (11a, 11b) festzuhalten.

4. Barriereanordnung nach Anspruch 1, worin das zweite Barriereelement (3) ein Paar elastischer Arme (11a, 11b) aufweist, die so ausgebildet sind, daß sie in ein Paar Flansche (8a, 8b) eingreifen, die von einem Hals (6) des ersten Barriereelements (2) nach außen ragen.

5. Barriereanordnung nach einem der vorhergehenden Ansprüche, worin das erste Barriereelement (2) einen Kopf (4) zum Anliegen an einer Oberfläche der Montagetafel und einen Hals (6) zum Hindurchragen durch die Öffnung in der Tafel (1) aufweist, und worin das zweite Barriereelement (3) Rillen zum Führen und Aufnehmen des Halses (6) aufweist.

6. Vorrichtung, die eine Tafel mit einer Öffnung darin und eine Vielzahl von Bestandteilen in einer Abfolge in der Öffnung montiert aufweist, wobei eine Barriereanordnung nach einem der vorhergehenden Ansprüche mit dem ersten und dem zweiten Element in Eingriff zwischen benachbarten Steuervorrichtungen montiert ist.

7. Vorrichtung nach Anspruch 6, worin das zweite Barriereelement (3) zumindest einen vorragenden Zapfen (10) aufweist, der in eine Ausnehmung (19) im/in den benachbarten Bestandteil(en) (A) eingreift.

8. Vorrichtung nach Anspruch 7, worin ein Paar elastischer Vorsprünge (19a, 19b) innerhalb der Ausnehmung (19) vorgesehen ist, um den Zapfen (10) zu halten.

## Revendications

1. Assemblage de cloisons pour compartimenter une ouverture dans un panneau (1), afin de séparer des composants adjacents (A) montés suivant une rangée dans l'ouverture, l'assemblage comprenant :
un premier élément de cloison (2) pour l'insertion dans ladite ouverture depuis un côté du panneau (1), caractérisé en ce qu'il est réalisé un deuxième élément de cloison (3) pour l'insertion entre lesdits composants adjacents depuis l'autre côté du panneau (1), les premier et deuxième éléments pouvant venir en prise mutuellement.

2. Assemblage de cloisons selon la revendication 1, dans lequel le deuxième élément de cloison (3) présente une paire de mâchoires élastiques (11a,11b) aptes à venir en prise dans des rebords correspondants (8a,8b) faisant saillie vers l'extérieur depuis le premier élément de cloison (2).

3. Assemblage de cloisons selon la revendication 2, dans lequel le premier élément de cloison (2) présente un collet (6) et une tête élargie (4), et lesdits rebords (8a,8b) font saillie depuis les côtés opposés du collet (6), et la largeur de la pièce du collet (6) au loin de la tête (4) est plus petite que la largeur entre les rebords (8a,8b), et les bras (11a,11b) viennent en prise dans les rebords (8a,8b) pour retenir au moins une partie du collet entre les bras (11a,11b).

4. Assemblage de cloisons selon la revendication 1, dans lequel le deuxième élément de cloison (3) présente une paire de bras élastiques (11a,11b) aptes à venir en prise avec une paire de rebords (8a,8b) faisant saillie vers l'extérieur depuis un collet (6) du premier élément de cloison (2).

5. Assemblage de cloisons selon l'une des revendications précédentes, dans lequel le premier élément de cloison (2) présente une tête (4) qui bute contre une surface du panneau de montage, et un collet (6) pour faire saillie à travers l'ouverture dans le panneau (1), et dans lequel le deuxième élément de cloison (3) présente des rainures pour guider et loger le collet (6).

6. Appareil présentant un panneau avec une ouverture à l'intérieur et une pluralité de composants montés suivant une rangée dans l'ouverture, dans celle-ci se trouve un assemblage de cloisons selon l'une des revendications précédentes,montées entre des dispositifs de réglage adjacents, les premier et deuxième éléments étant en prise.

7. Appareil selon la revendication 6, dans lequel le deuxième élément de cloison (3) présente au moins une broche faisant saillie (10) venant en prise dans un évidement (19) dans le ou les composants adjacents (A).

8. Appareil selon la revendication 7, dans lequel une paire de saillies élastiques (19a,19b) sont réalisées à l'intérieur de l'évidement (19) afin de retenir la broche (10).
